# EUROPÄISCHE PATENTSCHRIFT

(11) **EP 1 510 665 B1**
(45) Veröffentlichungstag und Bekanntmachung des Hinweises auf die Patenterteilung: **17.07.2013**
(21) Anmeldenummer: 04103732.6
(22) Anmeldetag: 03.08.2004
(51) Int. Cl.: F01M 13/04, B01D 45/14, B04B 1/04, B04B 5/08

(54) **Zentrifugalabscheider**
Centrifugal separator
Séparateur centrifuge

(30) Priorität: 23.08.2003 DE 10338769
(43) Veröffentlichungstag der Anmeldung: 02.03.2005
(73) Patentinhaber: MANN+HUMMEL GmbH, 71638 Ludwigsburg (DE)
(72) Erfinder: Bolda, Jan, 70806, Kornwestheim (DE); Fischer, Helmuth, 97941, Tauberbischofsheim (DE)

(56) Entgegenhaltungen:
- WO-A-01/00969
- DE-A- 10 300 976
- FR-A- 2 259 996
- GB-A- 1 300 749
- GB-A- 2 128 903
- US-A- 3 447 290

## Beschreibung

### Stand der Technik

Die Erfindung betrifft einen Zentrifugalabscheider zur Abscheidung von in einem Luftstrom mitgeführten Öl- und/oder Feststoffpartikeln nach dem Oberbegriff des Patentanspruches 1. Außerdem betrifft die Erfindung ein Verfahren zur Reinigung eines Fluidstromes durch einen Zentrifugalabscheider nach dem Oberbegriff des nebengeordneten Patentanspruches 13.

Eine derartige Entlüftungsvorrichtung ist beispielsweise aus der WO 01/00969 A1 bekannt. Diese weist einen Zentrifugalölabscheider auf, der einen Gemischeinlass für ein Öl/Luftgemisch und einen Luftauslass für Reinluft sowie einen Ölauslass für Öl aufweist. Der bei der bekannten Entlüftungsvorrichtung verwendete Zentrifugalölabschelder besitzt einen Rotor, welcher in einem feststehenden Gehäuse angeordnet Ist. Am Umfang weist der Rotor mehrere Schichten auf, durch die das fluidbehaftete Gas durchströmt und wobei durch die einwirkende Zentrifugalkraft sich die Tropfen an diesen Schichten abscheiden und durch den Ölauslass ausgeschieden werden. Damit das ungereinigte Fluid nicht als eine Art Bypass an den Schichten des Rotors zum Auslass vorbeiströmen kann, erfolgt hier eine Abdichtung zwischen Rotor und Gehäuse durch eine berührende Dichtung.

Aus der GB 585 695 ist eine Vorrichtung zum Trennen von Öl oder anderen flüssigen Partikeln aus Luft oder anderen Gasen bekannt mit einem zylindrischen Gehäuse, in dem ein drehbar angeordneter, hohler zylindrischer Korb ausgebildet ist, wobei der hohle Korb mit inneren radialen Stegen und einer Seitenwand mit Löchern vorgesehen ist.

Üblicherweise wird die aus dem Zentrifugalölabscheider austretende Reinluft dem Ansaugtrakt einer Brennkraftmaschine zugeleitet. Dementsprechend besteht der Wunsch, dass die Reinluft möglichst wenig Ölrückstände enthält. Einerseits kann dadurch der Ölverbrauch der Brennkraftmaschine gesenkt werden, andererseits lässt sich dadurch das Emissionsverhalten der Brennkraftmaschine verbessern. Für moderne Kraftstoffeinspritzanlagen, die mit hochsensiblen Sensoren und Ventilen arbeiten, ist ein besonders hoher

Reinheitsgrad für die Reinluft erwünscht. Beschädigungen der empfindlichen Bauteile sowie Messwertbeeinflussung sind zu vermeiden.

Aufgabe der Erfindung ist es, einen Zentrifugalabscheider zu entwickeln, welcher einen einfachen Aufbau aufweist, einen hohen Abscheidegrad besitzt und ein verbessertes Dichtkonzept aufweist. Eine weitere Aufgabe ist es, ein Verfahren zur Reinigung eines Fluidstromes durch einen Zentrifugalabscheider anzugeben.

Diese Aufgabe wird erfindungsgemäß durch einen Zentrifugalabscheider nach dem Oberbegriff des Patentanspruches 1 und des nebengeordneten Patentanspruches 12 gelöst.

### Vorteile der Erfindung

Der erfindungsgemäße Zentrifugalabscheider zur Abscheidung von in einem Luftstrom mitgeführten Öl- und/oder Feststoffpartikeln weist einen Gemischeinlass für die Ölund/oder Feststoffpartikel behaftete Luft, einen Luftauslass für die Reinluft und einen Ölauslass für die Öl- und/oder Feststoffpartikel auf. Hierbei ist das Gehäuse als Stator für einen Rotor, welcher im Gehäuse konzentrisch angeordnet ist, ausgebildet. Der Rotor ist korrespondierend mit einem Antrieb verbunden, welcher den Rotor bis zu einer maximalen Drehzahl von ca. 25.000 1/min. beschleunigt. Im Inneren des Gehäuses ist ein Korb drehfest mit der Rotorwelle verbunden, wobei der Korb einen im wesentlichen zylinderförmigen Teil, welcher sich in Richtung des Gemischeinlasses erstreckt und im wesentlichen parallel zum Stator verläuft, aufweist. Der zwischen Korbaußenwand und Gehäuseinnenwand entstehende Spalt lässt sich hierbei durch das Abstandsverhältnis zwischen Rotorachse und Korbaußenwand zur Rotorachse bis Gehäuseinnenwand beschreiben. Dieses Verhältnis liegt bevorzugt bei 0,7 bis 0,98. Durch die Einhaltung dieser Spaltbreite wird ein Effekt erzeugt, der eine berührende Abdichtung dieses Spaltes nicht mehr notwendig macht. Die sich hierbei einstellenden Strömungsverhältnisse sorgen dafür, dass der Öl- und/oder Feststoffpartikel behaftete Gasstrom im Inneren des Korbes durch die Korbrotation auch in Rotation versetzt wird, der Gasstrom durch die Zentrifugalkraft von den anhaftenden Öl- und/oder Feststoffpartikel befreit wird und ein Teil dieses Gasstromes entgegengesetzt der Haupteinströmrichtung zwischen Korbaußenwand und Gehäuseinnenwand wieder in Richtung Einströmöffnung strömt. Dies wird durch die unterschiedlichen Druckverhältnisse, welche durch die Abstandsverhältnisse bestimmt werden, hervorgerufen. Bei der Rotation des Rotors erfährt die zwischen Rotorachse und Korb eingeschlossene Luft eine radial nach außen gerichtete Beschleunigung, was dazu führt, dass sich der Hauptmassenstrom in radial nach außen gerichteter Richtung an die Korbinnenwand verschiebt. Weiterhin baut sich in radialer Richtung ein Druckprofil auf, und das Anströmen der oberen Stirnfläche des Gehäuses führt zu einem zusätzlichen Staueffekt. Dieses Pumpen ergibt im Spalt zwischen Korb und Gehäusewand ein axiales Druckprofil, welches zu der oben genannten Strömung entgegengesetzt zur Hauptströmung zwischen Korbaußenwand und innerer Gehäusewand führt. Ein bestimmter Anteil vom Gesamtmassenstrom wird so ständig im Bypass geführt. Bei einer zu großen Ausführung des Spaltes zwischen Korbaußenwand und Gehäuseinnenwand kommt es zur Bildung von geordneten Wirbelstrukturen, was den Widerstand im Spalt erhöht. Diese geordneten Wirbelstrukturen - auch Taylor-Wirbel genannt - entstehen im Spalt zwischen rotierender Korbwand und stillstehender Gehäusewand in Abhängigkeit von Drehzahl und Spaltbreite. Das Material des erfindungsgemäßen Zentrifugalabscheiders ist hierbei frei zu wählen, es muss jedoch darauf geachtet werden, dass eine genügend hohe Steifigkeit eingehalten wird, um bei den extrem hohen Drehzahlen keine Gestaltveränderung des Korbes bzw. des Rotors hervorzurufen.

Gemäß einer vorteilhaften Ausgestaltung der Erfindung erstreckt sich der Korb über die nahezu gesamte Länge des inneren Gehäuses und trennt so einen inneren Ringraum im Inneren des Korbes zwischen Korbinnenseite und Rotorwellenaußenseite von einem äußeren Spaltraum zwischen Korbaußenseite und Gehäuseinnenwand. Durch die möglichst vollständige Überdeckung der Gehäuseinnenwand mit dem Korb wird zum einen der Strömungsverlauf sehr positiv beeinflusst und zum anderen eine erhöhte Abscheideleistung erzielt. Das einströmende Öl- und/oder Feststoffpartikel behaftete Gas erfährt so eine sehr starke Rotation, wodurch äußerst große Zentrifugalkräfte auf die mitgeführten Öl- und/oder Feststoffpartikel wirken, welche so im Strömungsverlauf einfacher an der Korbinnenwand abgeschieden werden können. Voraussetzung hierbei ist natürlich, dass der Korb über den gesamten axialen Verlauf eine geschlossene Oberfläche aufweist. Die innere Korboberfläche kann hierbei glatt, gemustert oder strukturiert sein. Dies ist dem jeweiligen Anwendungsfall anzupassen.

Zur Verbesserung der Abscheidung der mit Öl- und/oder Feststoffpartikel behafteten Luft ist es vorteilhaft, im Inneren des Korbes Leitelemente anzuordnen, welche sich in axialer Richtung erstrecken. Diese Leitelemente verlaufen dabei parallel zur Rotorachse und erstrecken sich bevorzugt über den gesamten zylindrischen Bereich des Korbes. Das einströmende Gasgemisch trifft hierbei auf die mit dem Korb rotierenden Leitelemente, wird von diesen mitgerissen und sofort in ebenso starke Rotation versetzt. Dies verbessert die Abscheideleistung des Zentrifugalabscheiders erheblich. Die Leitelemente können hierbei einstückig mit dem Korb hergestellt sein oder nachträglich lösbar oder unlösbar mit dem Korb verbunden werden. Dies könnte z.B. über Einstecken, Einkleben, Einschweißen oder sonstige Verbindungsarten erfolgen. Die nach innen gerichtete Kante der Leitelemente verläuft hierbei gerade und achsparallel. Es sind jedoch auch eine Zickzack- oder Sinusform denkbar, um bestimmte Effekte in der Gasströmung zu erzeugen.

Gemäß einer zweckmäßigen Weiterbildung erstrecken sich die Leitelemente in radialer Richtung nach innen bis zur Rotorwelle und liegen eng und dichtend an dieser an. Hierdurch wird der Korbinnenraum in verschiedene Segmente wie Kuchenstücke eingeteilt, wobei die Leitelemente bevorzugt symmetrisch im Korb verteilt sind, um keine Unwucht zu erzeugen, die bei derart hohen Drehzahlen eine sehr negative Wirkung haben könnte. Das in die Teilsegmente einströmende Gasgemisch erfährt durch die Leitelemente eine weitere rotative Kraft, wodurch das Gasgemisch im Inneren der Teilsegmente sich wie bei einem Tornado spiralförmig um eine im Inneren der Teilsegmente angeordnete virtuelle Achse in Richtung des Reinluftauslasses weiterbewegt. Durch die Überlagerung der Rotation um die Rotorwelle und der Eigenrotation des Fluidstromes im Teilsegment ergeben sich an bestimmten Sektionen des Gasstromes durch die Addition der beiden Geschwindigkeiten sehr hohe Zentrifugalkräfte auf die mitgeführten Öl- und/oder Feststoffpartikel. Die Öl- und/oder Feststoffpartikel werden dadurch an das innere Teilsegment des Korbes gedrückt, vereinigen sich dort zu einer Art viskosen Ölfilms und sinken dort bei Stillstand des Rotors durch die Schwerkraft nach unten. Bei Rotation des Rotors wird der Ölfilm durch die Strömung des Fluides in Richtung des Reinluftauslasses gedrückt, dort durch Schlitze im oberen Teil des Korbes oder durch Überschreiten der Korboberkante durch die Massenträgheit und die vorher wirkende Rotationskraft an die Gehäuseinnenwand gedrückt und läuft danach an der Gehäuseinnenwand durch die Schwerkraft und die entgegen der Hauptströmrichtung wirkende Strömung im Spalt zwischen Korb und Gehäuseinnenwand nach unten bis zu dem Ölauslass.

Erfindungsgemäß weisen der zylinderförmige Teil des Korbes und die Mantellinie des Gehäuses zueinander einen Winkel im ungefähren Bereich bis zu10° auf, wobei der Öffnungswinkel zum Lufteinlass hin öffnet. Dies ergibt eine positive Wirkung auf das Druckgefälle zwischen dem oberen Teil des Spaltes zwischen Korbaußenwand und Gehäuseinnenwand und dem unteren Teil des Spaltes zwischen Korb und Gehäuse, wobei hier durch den dadurch resultierenden größeren Druck im oberen Bereich des Spaltes sichergestellt wird, dass die Spaltströmung des Gases sich nur in Richtung des Gaseinlasses ausbilden kann. Die genaue Größe des Winkels sollte den gewünschten Druckverhältnissen und den Erfordernissen, die je nach Einsatzart unterschiedlich sind, angepasst werden.

Gemäß einer weiteren Ausgestaltung der Erfindung weist der zylinderförmige Teil des Korbes an seinem unteren, dem Gemischeinlass zugewandten, Ende eine radial nach innen weisende Nase auf. Diese Nase wirkt sich einerseits wiederum auf das Druckgefälle im Spalt zwischen Reinluftauslass und Gemischeinlass aus und andererseits auf die Verwirbelung des Gasgemisches in den einzelnen Korbsegmenten. Die Länge der radial nach innen weisenden Nase ist dabei wiederum abhängig von dem erwartenden Abscheideergebnis. Der positive Effekt wird durch die unterschiedlichen Durchmesserverhältnisse zwischen Ein- und Auslass des Korbes hervorgerufen. Idealerweise liegt dieses Verhältnis im Bereich von 0,3 bis 0,95.

In einer zweckmäßigen Ausgestaltung der Erfindung ist der Antrieb hydraulisch über Öl, Wasser oder Kraftstoff ausgeführt. Hierbei wird entweder der Rückstoßeffekt einer austretenden Flüssigkeit, wie eben z.B. Öl, Wasser oder Kraftstoff, oder eine Art Turbineneffekt, indem die Flüssigkeit auf Leitschaufeln trifft, ausgenutzt. Vorteilhaft ist hierbei, dass in einem Kraftfahrzeug sehr viele Fluide vorhanden sind und einfach über vorhandene oder zusätzliche Pumpen der benötigte Druck zur Verfügung gestellt werden kann.

Es ist allerdings ebenso möglich, den Antrieb pneumatisch auszuführen. Hierzu ließen sich die im Kraftfahrzeug im Betrieb sowieso vorhandenen Abgase nutzen oder auch durch Verdichtung jedweder Art unter Druck stehende Gase. Im einfachsten Fall wäre das eine Abzweigung von durch einen Turbolader verdichteter Ansaugluft oder beispielsweise durch einen separaten Kompressor, um den benötigten Druck aufzubauen. Auch hier gibt es dann wiederum die Möglichkeit der Nutzung des Rückstoßprinzipes oder das Nutzen eines Turbineneffektes.

Als dritte Möglichkeit lässt sich die Nutzung elektrischer Energie für den Antrieb realisieren, wobei der Antrieb dann als schnelllaufender Motor ausgeführt ist.

In Abhängigkeit der verschiedenen Einbau- und Anordnungssituationen ist es notwendig, verschiedene Alternativen zur Anordnung des Antriebes vorzusehen. Gemäß einer dieser Alternativen wird der Antrieb innerhalb des Rotors in der Rotorwelle angeordnet. Hier lässt sich in der Ausführung vorzugsweise ein Elektromotor einsetzen, über geeignete Umlenkungen sind jedoch auch die oben erwähnten pneumatischen oder hydraulischen Antriebsvarianten denkbar.

Ebenso möglich ist es, den Antrieb innerhalb des Gehäuses anzuordnen und korrespondierend mit der Rotorwelle zu verbinden. Dies ergibt einen kompakten Zentrifugalabscheider, welcher leicht ein- und auszubauen ist und wobei nur eine gewisse Anzahl von Anschlüssen mit der Brennkraftmaschine hergestellt werden muss. Für diese Variation sind alle drei oben genannten Antriebsarten gleichgestellt denkbar.

Schließlich ist es auch möglich, den Antrieb außerhalb des Gehäuses anzuordnen und wiederum die Rotorwelle korrespondierend mit dem Antrieb zu verbinden. Hier ist es vorteilhaft, dass keine besondere Abdichtung zwischen dem Inneren des Gehäuses und dem Antrieb vorgenommen werden muss, so dass Antrieb und Zentrifugalabscheider zwei separate Gehäuse aufweisen.

Bei dem erfindungsgemäßen Verfahren zur Reinigung eines Fluidstromes, insbesondere eines Kurbelgehäuseentlüftungsgases, wird ein Öl- und/oder Feststoffpartikel behafteter Fluidstrom durch einen Fluidgemischeinlass in einen Zentrifugalabscheider eingeleitet. Der Zentrifugalabscheider weist ein Gehäuse, welches den Stator bildet, und einen konzentrisch im Gehäuse angeordneten Rotor auf, wobei der Rotor korrespondierend mit einem Antrieb verbunden ist. Der Antrieb kann hierbei außerhalb des Zentrifugalabscheiders angeordnet und korrespondierend mit der Rotorwelle verbunden sein oder im Gehäuse des Zentrifugalabscheiders integriert sein oder sogar als elektrischer Antrieb in die Rotorwelle selbst integriert sein. Weiterhin ist ein Korb drehfest mit der Rotorwelle verbunden, welcher einen zylinderförmigen Teil aufweist. Der Fluidstrom strömt durch den Fluideinlass in das Gehäuse und weiter durch die untere Öffnung des Korbes in den Korb, welcher aufgrund der drehfesten Verbindung mit der Rotorwelle eine hohe Rotationsgeschwindigkeit aufweist und wird so ebenfalls in eine starke Rotation versetzt. Die in dem Fluidstrom vorhandenen Öl- und/oder Feststoffpartikel wandern durch die Zentrifugalkraft radial nach außen und werden an der Korbinnenwand abgeschieden. Der gereinigte Fluidstrom verlässt den Zentrifugalabscheider durch einen Luftauslass, und die abgeschiedenen Öl- und/oder Feststoffpartikel werden durch einen Ölauslass ausgetragen. Ein Teilstrom des gereinigten Fluidstromes verlässt den Zentrifugalabscheider nicht durch den Luftauslass, sondern strömt durch sich aufbauende Druckdifferenzen im Fluidstrom durch den Spalt zwischen Korbaußenwand und Gehäuseinnenwand entgegen der Hauptströmungsrichtung und wird so unterhalb des Korbes wieder der Hauptströmung zugeführt. Durch die sich aufgrund der Geometrie ergebenen Druckdifferenzen und die dadurch resultierende Strömungsrichtung in dem Spalt zwischen Korb und Gehäuse entgegen der Hauptströmungsrichtung ist sichergestellt, dass kein ungereinigtes Fluid in der Art eines Bypasses durch den Spalt den Zentrifugalabscheider wieder verlassen kann. Gemäß einer vorteilhaften Ausgestaltung des Verfahrens weist der Korb sich axial erstreckende Leitelemente, welche bis an die Rotorwelle heranragen und symmetrisch über den Korbumfang verteilt sind, auf. Diese Leitelemente teilen den Korb in Teilsegmente, ähnlich Kuchenstücken, auf. Der Fluidstrom strömt nun durch den Gemischeinlass in die jeweiligen Teilsegmente des Korbes ein, welcher eine hohe Rotationsgeschwindigkeit aufweist. Durch die Führung des Fluidstromes innerhalb der Leitelemente entwickelt sich in den jeweiligen Teilsegmenten eine eigene rotierende Wirbelströmung der Teilfluidströme, wobei durch die Addition der Rotationsgeschwindigkeiten von Teilfluidstrom und Rotor das Fluidgemisch stellenweise eine sehr hohe Geschwindigkeit aufweist. Da die Öl- und/oder Feststoffpartikel massebehaftet sind, werden diese durch die Zentrifugalkraft innerhalb der Teilsegmente an den Leitelementen oder an der Innenwand des Korbes abgeschieden. Durch die Kohäsionskräfte innerhalb der feinen Öl- und/oder Feststoffpartikel entsteht so ein viskoser Ölfilm, welcher durch den Ölauslass abgeführt werden kann.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt:
- Figur 1: einen erfindungsgemäßen Zentrifugalabscheider in einem Längsschnitt und
- Figur 2: einen Querschnitt durch den zylinderförmigen Teil des Korbes.

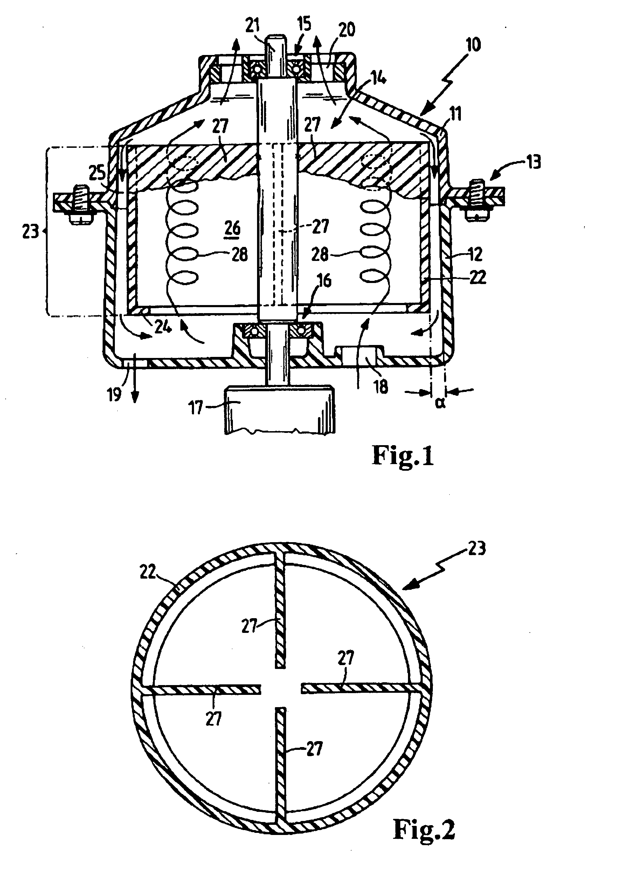

Die Figur 1 zeigt einen Zentrifugalabscheider 10 in einem Längsschnitt. Hierbei weist der Zentrifugalabscheider 10 ein Gehäuse, bestehend aus Gehäuseoberteil 11 und Gehäuseunterteil 12, welche über eine Schraubverbindung 13 miteinander verbunden sind, auf. Im Gehäuse ist ein Rotor 14 drehbar gelagert, wobei die Lagerung durch ein Radiallager 15 im Gehäuseoberteil 11 und ein Radiallager 16 im Gehäuseunterteil 12 erfolgt. Der Rotor 14 ist mit einem Antrieb 17 korrespondierend verbunden, welcher die Rotationsbewegung des Rotors 14 auslöst. Im Gehäuseunterteil 12 sind ein Fluideinlass 18 und ein Ölauslass 19 angeordnet, wobei der Fluideinlass 18 einen erhöhten Kragen aufweist, um evtl. angesammelte Öl- und/oder Feststoffpartikel nicht durch diesen Fluideinlass 18 abfließen zu lassen. Dahingegen ist der Ölauslass 19 am tiefsten Punkt des Gehäuseunterteils 12 angeordnet. Weiterhin ist es sinnvoll, den Ölauslass 19 radial möglichst weit entfernt von der Mittelachse des Rotors 14 anzuordnen, da die Öl- und/oder Feststoffpartikel durch die Rotation des Rotors ebenso radial nach außen gedrückt werden. Während in der hier dargestellten Ausführungsform der Fluideinlass 18 achsparallel zum Rotor 14 ausgerichtet ist, kann dieser Fluideinlass 18 auch geneigt oder quer zum Rotor 14, insbesondere radial zum Rotor 14 oder tangential zum Gehäuse 11, 12 angeordnet sein. Der Rotor 14 weist eine Rotorwelle 21 und einen drehfest mit der Rotorwelle 21 verbundenen Korb 22 auf. Der in Richtung Luftauslass 20 und Fluideinlass 18 offene Korb 22 besteht aus einem zur Rotorwelle 21 parallelen zylinderförmigen Teil 23 und einer am unteren Ende des zylinderförmigen Teils 23 radial nach innen gerichteten Nase 24. Die Außenwand des Korbes 22 schließt mit der Innenwand des Gehäuses 11, 12 einen Winkel α ein, wobei dieser Winkel im ungefähren Bereich bis zu 10° angesiedelt ist und der Öffnungswinkel α sich in Richtung des Fluideinlasses 18 öffnet. Der zylinderförmige Teil 23 des Korbes 22 trennt einen Spalt 25, welcher sich zwischen Gehäuseinnenwand 11, 12 und Außenwand des zylinderförmigen Teils 23 befindet, von einem Korbraum 26, welcher zwischen Rotorwelle 21 und Innenwandung des zylinderförmigen Teils 23 des Korbes 22 angeordnet ist. Im Inneren des Korbes 22 sind Leitelemente 27 angeordnet, welche sich achsparallel zur Rotorwelle 21 erstrecken und sich - ausgehend vom zylinderförmigen Teil 23 - bis zur Rotorwelle 21 erstrecken. Der Korbraum 26 wird dadurch in mehrere Teilsegmente unterteilt. Der Weg der Gasströmung ist in Figur 1 durch Pfeile 28 angedeutet. Hierbei ist deutlich zu erkennen, dass die Luft durch den Fluideinlass 18 einströmt, in den Korbraum 26 des zylinderförmigen Teils 23 des Korbes 22 einströmt und innerhalb der einzelnen hier nicht dargestellten Segmente, welche durch die Unterteilung des Korbraumes 26 durch die Leitelemente 27 abgetrennt werden, in eine spiralförmige Rotation versetzt werden. Hierbei werden die Öl- und/oder Feststoffpartikel durch die Zentrifugalkraft an den Innenwänden des Korbes 22 und/oder an den Leitelementen 27 abgeschieden. Die gereinigte Luft verlässt den Korbraum 26 und der überwiegende Teil der gereinigten Luft strömt aus dem Zentrifugalabscheider 10 durch den Luftauslass 20 heraus. Ein Teilstrom der gereinigten Luft wird durch ein Druckgefälle in den Spalt 25 gedrückt und strömt entgegen der Hauptströmrichtung in dem Spalt 25 in Richtung des Fluideinlasses 18. Nach Verlassen des Spaltes 25 vermengt sich der Teilstrom mit dem einströmenden Fluidgemisch und durchläuft wiederum den Korbraum 26. Es ist wichtig, die Geometrie des Rotors in Bezug auf das Gehäuse derart zu wählen, dass immer ein gewisser Teilstrom gegen die Hauptströmrichtung gegen den Spalt 25 strömt, um ein Durchströmen des Spaltes in Hauptströmrichtung durch ungereinigtes Fluid zu vermeiden. Dies ist notwendig, um einen hohen Abscheidegrad des Zentrifugalabscheiders 10 zu gewährleisten.

Die Figur 2 zeigt einen Querschnitt durch den zylinderförmigen Teil 23 des Korbes 22 ohne die restlichen Bauteile des Zentrifugalabscheiders 10. Der Figur 1 entsprechende Bauteile sind mit den gleichen Bezugszeichen versehen. In der Figur 2 ist deutlich die Anordnung der Leitelemente 27 über den Umfang des zylinderförmigen Teils 23 des Korbes 22 zu erkennen. Die Leitelemente 27 sind einstückig mit dem Korb 22 gefertigt und weisen bevorzugt alle dieselbe Geometrie auf. Durch die gleichmäßige Verteilung der Leitelemente 27 über den Umfang des zylinderförmigen Teils 23 des Korbes 22 wird eine gute Zentrierung des Korbes 22 gewährleistet. Ebenfalls positiv auf die Zentrierung wirkt sich die längenmäßige Auslegung der Leitelemente 27 aus, wenn diese - wie in diesem Beispiel - sich vom Korb 22 bis zur Rotorwelle 21 erstrecken.

## Patentansprüche

1. Zentrifugalabscheider (10) zur Abscheidung von in einem Luftstrom mitgeführten Öl- und/oder Feststoffpartikeln, insbesondere zur Entölung von Kurbelgehäusegasen einer Brennkraftmaschine, mit einem Gemischeinlass (18) für die Öl- und/oder Feststoffpartikel behaftete Luft, einem Luftauslass (20) für Reinluft und einem Ölauslass (19) für Öl- und/oder Feststoffpartikel, mit einem als Gehäuse (11, 12) ausgebildeten Stator, in dem ein Rotor (14) angeordnet ist, der korrespondierend mit einem Antrieb (17) verbunden ist, wobei ein Korb (22) mit dem Rotor (14) drehfest verbunden ist, wobei der Korb (22) einen im Wesentlichen zylinderförmigen Teil, welcher sich in Richtung des Gemischeinlasses (18) erstreckt und im Wesentlichen parallel zum Stator verläuft, aufweist, **dadurch gekennzeichnet, dass** die Außenwand des Korbes (22) mit der Innenwand des Gehäuses (11, 12) einen Öffnungswinkel (α) einschließt, wobei dieser Öffnungswinkel (α) im ungefähren Bereich bis zu 10° angesiedelt ist und der Öffnungswinkel α sich in Richtung des Fluideinlasses (18) öffnet.

2. Zentrifugalabscheider nach Anspruch 1, **dadurch gekennzeichnet, dass** sich der Korb (22) über die nahezu gesamte Länge des inneren Gehäuses (11, 12) erstreckt und so einen inneren Ringraum im Inneren des Korbes (22) von einem äußeren Spaltraum (25) zwischen Korb (22) und Gehäuseinnenwand trennt.

3. Zentrifugalabscheider nach einem der vorhergehenden Ansprüche, **dadurch gekennzeichnet, dass** im Inneren des Korbes (22) Leitelemente (27) angeordnet sind, welche sich in axialer Richtung erstrecken.

4. Zentrifugalabscheider nach Anspruch 3, **dadurch gekennzeichnet, dass** die Leitelemente (27) sich in radialer Richtung nach innen bis zur Rotorwelle (21) erstrecken und an dieser anliegen.

5. Zentrifugalabscheider nach einem der vorhergehenden Ansprüche, **dadurch gekennzeichnet, dass** der zylindrische Teil des Korbes (22) an seinem unteren Ende eine radial nach innen weisende Nase (24) aufweist, welche eine strömungsbeeinflussende Wirkung innehat.

6. Zentrifugalabscheider nach einem der vorhergehenden Ansprüche, **dadurch gekennzeichnet, dass** der Antrieb (17) hydraulisch über Öl, Wasser oder Kraftstoff ausgeführt ist.

7. Zentrifugalabscheider nach einem der Ansprüche 1 bis 5, **dadurch gekennzeichnet, dass** der Antrieb (17) pneumatisch über Abgase oder unter Druck stehende Gase ausgeführt ist.

8. Zentrifugalabscheider nach einem der Ansprüche 1 bis 5, **dadurch gekennzeichnet, dass** der Antrieb (17) als Elektroantrieb ausgeführt ist.

9. Zentrifugalabscheider nach einem der Ansprüche 6 bis 8, **dadurch gekennzeichnet, dass** der Antrieb (17) innerhalb des Rotors (14) angeordnet ist.

10. Zentrifugalabscheider nach einem der Ansprüche 6 bis 8, **dadurch gekennzeichnet, dass** der Antrieb (17) innerhalb des Gehäuses (11, 12) angeordnet ist.

11. Zentrifugalabscheider nach einem der Ansprüche 6 bis 8, **dadurch gekennzeichnet, dass** der Antrieb (17) außerhalb des Gehäuses angeordnet ist.

12. Verfahren zur Reinigung eines Fluidstromes, insbesondere eines Kurbelgehäuseentlüftungsgases, wobei ein Öl- und oder Feststoffpartikel belasteter Fluidstrom durch einen Gemischeinlass (18) in einen Zentrifugalabscheider (10), aufweisend ein Gehäuse (11, 12), welches den Stator bildet, und einen konzentrisch im Gehäuse (11, 12) angeordneten Rotor (14), eingeleitet wird und wobei der Rotor (14) korrespondierend mit einem Antrieb (17) verbunden ist, wobei der Fluidstrom in einen Ringraum einströmt, welcher durch den Raum zwischen dem Rotor (14) und einem Korb (22), welcher einen zylinderförmigen Anteil aufweist, gebildet wird, **dadurch gekennzeichnet, dass** die Außenwand des Korbes (22) mit der Innenwand des Gehäuses (11, 12) einen Öffnungswinkel (α) einschließt, wobei dieser Öffnungswinkel (α) im ungefähren Bereich bis zu 10° angesiedelt ist und der Öffnungswinkel α sich in Richtung des Fluideinlasses (18) öffnet und wobei der Fluidstrom durch die Rotation des Korbes (22), der drehfest mit dem Rotor (14) verbunden ist, in Rotation versetzt wird, wobei hierdurch die Öl- und/oder Feststoffpartikel durch die Zentrifugalkraft am Korb (22) abgeschieden werden und der gereinigte Fluidstrom den Zentrifugalabscheider durch einen Luftauslass (20) verlässt, wobei ein Teilstrom des gereinigten Fluidstromes durch sich aufbauende Druckdifferenzen im Fluidstrom durch den Spalt (25) zwischen Korb (22) und Gehäuse (11, 12) entgegen der Hauptströmrichtung strömt und unterhalb des Korbes (22) wieder der Hauptströmung zugeführt wird und die abgeschiedenen Öl- und/oder Feststoffpartikelanteile durch einen Ölauslass (18) ausgetragen werden.

13. Verfahren zur Reinigung eines Fluidstromes nach Anspruch 12, **dadurch gekennzeichnet, dass** der Fluidstrom durch im Korb (22) angebrachte, sich axial erstreckende Leitelemente(27) durch die Rotation des Korbes (22) in eine starke Rotation versetzt wird, wobei sich innerhalb der Segmente innerhalb des Korbes (22) eine eigene Wirbelströmung des Fluidstromes ergibt und sich die in der Luft gelösten Öl- und/oder Feststoffpartikel durch die einwirkende Zentrifugalkraft am Korb (22) und an den Leitelementen (27) niederschlagen und durch einen Ölauslass (19) ausgetragen werden.

## Claims

1. Centrifugal separator (10) for separating oil particles and/or solid particles carried in an air flow, in particular for de-oiling crankcase gases of an internal combustion engine, with a mixture inlet (18) for the air charged with oil particles and/or solid particles, an air outlet (20) for clean air and an oil outlet (19) for oil particles and/or solid particles, with a stator designed as housing (11, 12) in which a rotor (14) is disposed which is correspondingly connected with a drive (17), a basket (22) being connected with the rotor (14) in a rotationally fixed manner, the basket (22) featuring a substantially cylindrical part that extends in the direction of the mixture inlet (18) and extends substantially parallel to the stator, **characterized in that** the outer wall of the basket (22) forms an angle of aperture (α) with the internal wall of the housing (11, 12), this angle of aperture (α) having an approximate range of up to 10° and the angle of aperture (α) opening in the direction of the fluid inlet (18).

2. Centrifugal separator according to claim 1, **characterized in that** the basket (22) extends almost over the entire length of the inner housing (11, 12), thus separating an inner annular space inside of the basket (22) from an outer gap (25) between basket (22) and housing inner wall.

3. Centrifugal separator according to one of the above claims, **characterized in that** guiding elements (27) which extend in axial direction are disposed inside of the basket (22).

4. Centrifugal separator according to claim 3, **characterized in that** the guiding elements (27) extend in radial direction inwards up to the rotor shaft (21) and abut on it.

5. Centrifugal separator according to one of the above claims, **characterized in that** the cylindrical part of the basket (22) features at its lower end a radially inwards extending lug (24) which has a flow-influencing effect.

6. Centrifugal separator according to one of the above claims, **characterized in that** the drive (17) is executed hydraulically either by oil, water or fuel.

7. Centrifugal separator according to one of the claims 1 to 5, **characterized in that** the drive (17) is executed pneumatically either by exhaust gases or gases under pressure.

8. Centrifugal separator according to one of the claims 1 to 5, **characterized in that** the drive (17) is designed as electric drive.

9. Centrifugal separator according to one of the claims 6 to 8, **characterized in that** the drive (17) is disposed inside the rotor (14).

10. Centrifugal separator according to one of the claims 6 to 8, **characterized in that** the drive (17) is disposed inside the housing (11, 12).

11. Centrifugal separator according to one of the claims 6 to 8, **characterized in that** the drive (17) is disposed outside the housing.

12. Method for cleaning a fluid flow, in particular a crankcase venting gas, a fluid flow charged with oil particles and/or solid particles being introduced through a mixture inlet (18) into a centrifugal separator (10) featuring a housing (11, 12) which forms the stator, and a rotor (14) disposed concentrically in the housing (11, 12) and the rotor (14) being correspondingly connected with a drive (17), the fluid flow flowing into an annular space which is formed by the space between the rotor (14) and a basket (22) which features a cylindrical part, **characterized in that** the outer wall of the basket (22) forms an angle of aperture (α) with the internal wall of the housing (11, 12), this angle of aperture (α) having an approximate range of up to 10° and the angle of aperture (α) opening in the direction of the fluid inlet (18) and the fluid flow being rotated by the rotation of the basket (22) which is connected in a rotationally fixed manner with the rotor (14), the oil particles and/or solid particles being separated by the centrifugal force at the basket (22) and the cleaned fluid flow leaving the centrifugal separator through an air outlet (20), a partial flow of the cleaned fluid flow flowing, due to the pressure differentials that are generated in the fluid flow, in the opposite direction of the main flow through the gap (25) between basket (22) and housing (11, 12) and being returned to the main flow underneath the basket (22) and the separated oil particles and/or solid particles being discharged through an oil outlet (18).

13. Method for cleaning a fluid flow according to claim 12, **characterized in that** the fluid flow is strongly rotated, due to the rotation of the basket (22), by guiding elements (27) attached in the basket (22) and extending axially, an intrinsic eddy flow of the fluid flow being generated within the segments in the basket (22) and the oil particles and/or solid particles separated in the air being deposited, due to the applied centrifugal force, at the basket (22) and at the guiding elements (27) and being discharged through an oil outlet (19).

## Revendications

1. Cyclone de séparation (10) destiné à séparer des particules d'huile et/ou des particules solides acheminées dans un flux d'air, notamment destiné à déshuiler des gaz du carter de vilebrequin d'un moteur à combustion interne, avec une entrée de mélange (18) pour l'air chargé de particules d'huile et/ou de particules solides, une sortie d'air (20) pour l'air pur et une sortie d'huile (19) pour les particules d'huile et/ou les particules solides, avec un stator exécuté en tant que boîtier (11, 12) dans lequel est placé un rotor (14) qui est relié de manière correspondante à un entraînement (17), un panier (22) étant relié au rotor (14) de façon solidaire en rotation, le panier (22) présentant une partie essentiellement cylindrique qui s'étend en direction de l'entrée de mélange (18) et évoluant de manière essentiellement parallèle au stator, **caractérisé en ce que** la paroi extérieure du panier (22) forme avec la paroi intérieure du boîtier (11, 12) un angle d'ouverture (α), cet angle d'ouverture (α) ayant une amplitude approximative de 10° au maximum et l'angle d'ouverture (α) s'ouvrant en direction de l'entrée de fluide (18).

2. Cyclone de séparation selon la revendication 1, **caractérisé en ce que** le panier (22) s'étend sur quasiment toute la longueur du boîtier intérieur (11, 12) et sépare ainsi un espace annulaire intérieur situé à l'intérieur du panier (22) d'une fente extérieure (25) placée entre le panier (22) et la paroi intérieure du boîtier.

3. Cyclone de séparation selon l'une des revendications précédentes, **caractérisé en ce que** des éléments de guidage (27) s'étendant en sens axial sont disposés à l'intérieur du panier (22).

4. Cyclone de séparation selon la revendication 3, **caractérisé en ce que** les éléments de guidage (27) s'étendent en sens radial vers l'intérieur jusqu'à l'arbre de rotor (21) et sont en contact sur cet arbre.

5. Cyclone de séparation selon l'une des revendications précédentes, **caractérisé en ce que** la partie cylindrique du panier (22) présente au niveau de son extrémité inférieure un ergot (24) dirigé en sens radial vers l'intérieur et ayant un effet influençant le flux.

6. Cyclone de séparation selon l'une des revendications précédentes, **caractérisé en ce que** l'entraînement (17) est exécuté de manière hydraulique avec de l'huile, de l'eau ou du carburant.

7. Cyclone de séparation selon l'une des revendications 1 à 5, **caractérisé en ce que** l'entraînement (17) est exécuté de manière pneumatique avec des gaz d'échappement ou des gaz sous pression.

8. Cyclone de séparation selon l'une des revendications 1 à 5, **caractérisé en ce que** l'entraînement (17) est exécuté en tant qu'entraînement électrique.

9. Cyclone de séparation selon l'une des revendications 6 à 8, **caractérisé en ce que** l'entraînement (17) est disposé à l'intérieur du rotor (14).

10. Cyclone de séparation selon l'une des revendications 6 à 8, **caractérisé en ce que** l'entraînement (17) est disposé à l'intérieur du boîtier (11, 12).

11. Cyclone de séparation selon l'une des revendications 6 à 8, **caractérisé en ce que** l'entraînement (17) est disposé à l'extérieur du boîtier.

12. Procédé de nettoyage d'un flux de fluide, notamment d'un gaz de purge d'un carter de vilebrequin, un flux de fluide chargé de particules d'huile et/ou de particules solides étant introduit, à travers une entrée de mélange (18), dans un cyclone de séparation (10) présentant un boîtier (11, 12) qui forme le stator et un rotor (14) placé de manière concentrique dans le boîtier (11, 12), et le rotor (14) étant relié de manière correspondante avec un entraînement (17), le flux de fluide entrant dans un espace annulaire qui est formé par l'espace situé entre le rotor (14) et un panier (22) présentant une partie en forme de cylindre, **caractérisé en ce que** la paroi extérieure du panier (22) forme un angle d'ouverture (α) avec la paroi intérieure du boîtier (11, 12), cet angle d'ouverture (α) étant d'environ 10° au maximum et l'angle d'ouverture (α) s'ouvrant en direction de l'entrée du fluide (18) et le flux de fluide étant soumis à une rotation par la rotation du panier (22) qui est relié au rotor (14) de façon solidaire en rotation, les particules d'huile et/ou les particules solides étant ainsi séparées sous l'effet de la force centrifuge au niveau du panier (22) et le flux de fluide purifié quittant le cyclone de séparation par une sortie d'air (20), un flux partiel du flux de fluide purifié coulant, en raison des différences de pression qui se forment dans le flux de fluide, dans le sens inverse du flux principal à travers la fente (25) ménagée entre le panier (22) et le boîtier (11, 12) et étant réacheminé au flux principal en dessous du panier (22) et les particules d'huile et/ou les particules solides séparées étant évacuées à travers une sortie d'huile (18).

13. Procédé de nettoyage d'un flux de fluide selon la revendication 12, **caractérisé en ce que** le flux de fluide est soumis à une forte rotation, en raison de la rotation du panier (22), par des éléments de guidage (27) montés dans le panier (22) et s'étendant en sens axial, un courant tourbillonnaire intrinsèque du flux de fluide se formant au sein des segments à l'intérieur du panier (22) et les particules d'huile et/ou les particules solides séparées dans l'air se déposant, sous l'effet de la force centrifuge générée, sur le panier (22) et sur les éléments de guidage (27) et étant évacuées par une sortie d'huile (19).
